# EUROPEAN PATENT APPLICATION

(11) **EP 4 552 928 A2**
(43) Date of publication of application: **14.05.2025**
(21) Application number: 25166740.8
(22) Date of filing: 29.11.2017
(51) Int. Cl.: B60R 16/023

(54) **POD CONNECTION FOR AUTONOMOUS VEHICLE SENSORS**

(30) Priority: 29.11.2016 US 201615363212
(62) Divisional of application: 17817520.4
(71) Applicant: WAYMO LLC, Mountain View, CA 94043 (US)
(72) Inventor: IZADIAN, Jamal, Mountain View, 94043 (US)
(74) Representative: Davis, Steven George

(57) **Abstract**

Examples relating to vehicle radar systems are described. An example radar system may include a sensor unit. The sensor unit includes a plurality of sensors configured to sense the environment of a vehicle. The sensor unit also includes a coupling portion configured to couple the sensor unit to a vehicle. The coupling portion includes a power supply connection and a data bus. The data bus may be configured to provide information to a control system of the vehicle.

## Description

### CROSS REFERENCE TO RELATED APPLICATION

The present application claims priority to U.S. Patent Application No. 15/363,212, filed on November 29, 2016, which is hereby incorporated by reference in its entirety.

### BACKGROUND

Vehicles are often used for various tasks, such as for the transportation of people and goods throughout an environment. With advances in technology, some vehicles are configured with systems that enable the vehicles to operate in a partial or fully autonomous mode. When operating in a partial or fully autonomous mode, some or all of the navigation aspects of vehicle operation are controlled by a vehicle control system rather than a traditional human driver. Autonomous operation of a vehicle can involve systems sensing the vehicle's surrounding environment to enable a computing system to plan and safely execute navigating routes to reach desired destinations.

### SUMMARY

Disclosed herein are example implementations of a vehicular system. An example vehicular system includes a control system configured to provide autonomous control to a vehicle. The vehicular system also includes a connector coupled to a roof of the vehicle configured to enable a sensor unit to couple to the vehicle. The connector includes a power supply connection and a data bus. The data bus may be coupled to the control system.

In another aspect, an example sensor unit is provided. The sensor unit includes a plurality of sensors configured to sense an environment of a vehicle. The sensor unit also includes a coupling portion configured to couple the sensor unit to a vehicle. The coupling portion includes a power supply connection and a data bus. The data bus may be configured to provide information to a control system of the vehicle.

In another aspect, an example method is provided. The method includes providing a control system configured to provide autonomous control to a vehicle. The method also includes providing a connector coupled to a roof of the vehicle configured to enable a sensor unit to couple to the vehicle. The connector includes a power supply connection and a data bus, where the data bus is coupled to the control system.

In another aspect, disclosed herein are example implementations of a system for a vehicle radar system. An example system may include means for providing autonomous control to a vehicle. The system also includes means for coupling a sensor unit to a roof of the vehicle. The connector includes a power supply connection and a data bus, where the data bus is coupled to the control system.

The foregoing summary is illustrative only and is not intended to be in any way limiting. In addition to the illustrative aspects, embodiments, and features described above, further aspects, embodiments, and features will become apparent by reference to the figures and the following detailed description.

### BRIEF DESCRIPTION OF THE FIGURES

Figure 1 is a functional block diagram illustrating an example vehicle.
Figure 2 depicts an example physical configuration of a vehicle.
Figure 3A illustrates a block diagram of a sensing system including a coupler.
Figure 3B illustrates a block diagram of another sensing system including a coupler.
Figure 4A depicts a physical configuration of a vehicle.
Figure 4B depicts a physical configuration of a vehicle.
Figure 5 is a flow chart of a method, according to an example embodiment.
Figure 6 depicts a schematic diagram of an example computer program.

### DETAILED DESCRIPTION

In the following detailed description, reference is made to the accompanying figures, which form a part hereof. In the figures, similar symbols typically identify similar components, unless context dictates otherwise. The illustrative embodiments described in the detailed description, figures, and claims are not meant to be limiting. Other embodiments may be utilized, and other changes may be made, without departing from the scope of the subject matter presented herein. It will be readily understood that the aspects of the present disclosure, as generally described herein, and illustrated in the figures, can be arranged, substituted, combined, separated, and designed in a wide variety of different configurations, all of which are explicitly contemplated herein.

A radar system for a vehicle is often used to sense an environment in a forward direction of the vehicle. For example, the radar system may measure the distance between the vehicle and another vehicle navigating in front of the vehicle. Although this type of radar system may improve forward navigation for the vehicle, the radar system does not provide a 360-degree view of the vehicle's surrounding environment.

A vehicle may have a top-mounted sensor unit. The sensor unit may include both RADAR and LIDAR sensors. In some examples, the sensor unit may include other sensors as well, such as cameras, etc. The sensor unit may be configured to be detachable from the vehicle. Thus, a vehicle may be equipped with a connector that allows a sensor unit to be connected to the vehicle in order to attach the sensors to the vehicle. The top-mounted sensor unit may use a standardized connection to the vehicle. The standardized connection may enable a sensor unit to be coupled to vehicles from various manufacturers. The connection may support cooling, power transmission, data transmission, and transmission of other sensor data (brakes, throttle, etc.). In some implementations, a universal interface may enable a sensor unit to be coupled to a wide range of vehicles.

In some instances, a vehicle may be sold as "autonomous ready." An autonomous ready vehicle may have some of the capabilities to perform autonomous driving functions, but may lack some of the hardware to enable these functions. An autonomous ready vehicle may include a connector that allows the sensor unit to be coupled to the vehicle when autonomous functionality is desired.

In one example, an autonomous ready vehicle may have the processing capability to perform autonomous functions, but lacks a sensor unit. In that case, a sensor can be coupled to the vehicle using a connector. In another example, the autonomous ready vehicle may have a data bus that would allow autonomous control, but lacks both sensing and processing capabilities. In that case, the sensor unit that can be coupled to the vehicle may also include a processing unit that can operate the vehicle autonomously. Additionally, the system may use the computational capability of the vehicle to do sensor fusion and calculations and responsively control the vehicle.

A conversion unit may perform optional computation (if the vehicle is not equipped) and voltage conversion (if the vehicle as only a single voltage bus). The conversion unit may perform self-driving calculations, in full or in part. In some examples the conversion unit may take over autopilot or other driver assist functions. The conversion unit may be able to tap into the data bus of the vehicle as a third party expansion module. In another embodiment, e.g., for vehicles that do nott have sufficient computational resources, an intermediate computational module may be inserted between the sensor unit and the vehicle to enable additional computation capabilities.

Example radar systems described herein may capture measurements of a vehicle's surroundings. In some instances, a computing system of a vehicle or a remote system may use the radar data to determine control operations, such as route navigation and obstacle avoidance. As a result, the radar system may enable a vehicle to operate in a partial or fully autonomous mode. For instance, an example radar system may also be configured to supplement other sensor systems of a vehicle within some implementations. In some implementations, the radar system may provide radar data to an interface that a driver may use to assist with navigating the vehicle.

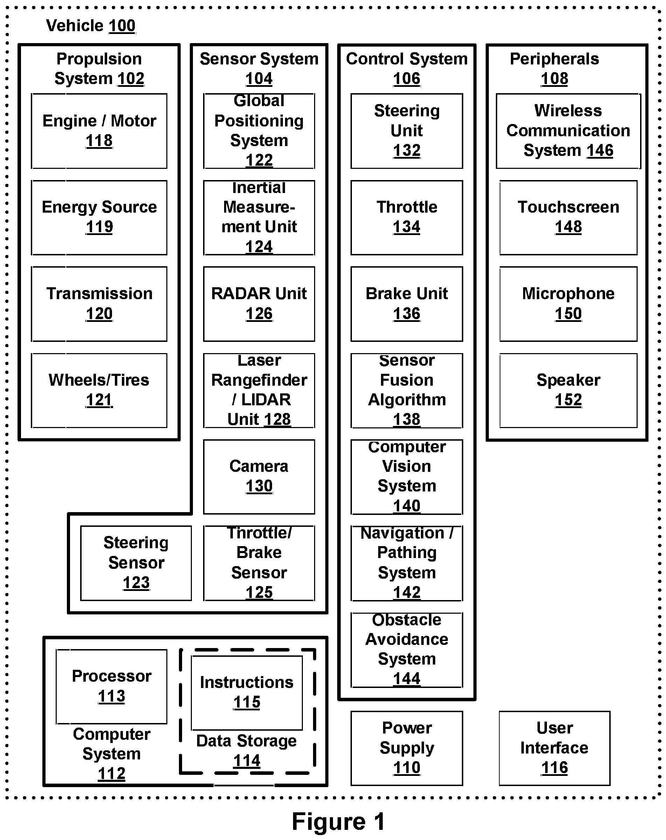

Referring now to the figures, Figure 1 is a functional block diagram illustrating example vehicle 100, which may be configured to operate fully or partially in an autonomous mode. More specifically, vehicle 100 may operate in an autonomous mode without human interaction through receiving control instructions from a computing system. As part of operating in the autonomous mode, vehicle 100 may use sensors to detect and possibly identify objects of the surrounding environment to enable safe navigation. In some implementations, vehicle 100 may also include subsystems that enable a driver to control operations of vehicle 100.

As shown in Figure 1, vehicle 100 may include various subsystems, such as propulsion system 102, sensor system 104, control system 106, one or more peripherals 108, power supply 110, computer system 112, data storage 114, and user interface 116. In other examples, vehicle 100 may include more or fewer subsystems, which can each include multiple elements. The subsystems and components of vehicle 100 may be interconnected in various ways. In addition, functions of vehicle 100 described herein can be divided into additional functional or physical components, or combined into fewer functional or physical components within implementations.

Propulsion system 102 may include one or more components operable to provide powered motion for vehicle 100 and can include an engine/motor 118, an energy source 119, a transmission 120, and wheels/tires 121, among other possible components. For example, engine/motor 118 may be configured to convert energy source 119 into mechanical energy and can correspond to one or a combination of an internal combustion engine, an electric motor, steam engine, or Stirling engine, among other possible options. For instance, in some implementations, propulsion system 102 may include multiple types of engines and/or motors, such as a gasoline engine and an electric motor.

Energy source 119 represents a source of energy that may, in full or in part, power one or more systems of vehicle 100 (e.g., engine/motor 118). For instance, energy source 119 can correspond to gasoline, diesel, other petroleum-based fuels, propane, other compressed gas-based fuels, ethanol, solar panels, batteries, and/or other sources of electrical power. In some implementations, energy source 119 may include a combination of fuel tanks, batteries, capacitors, and/or flywheels.

Transmission 120 may transmit mechanical power from engine/motor 118 to wheels/tires 121 and/or other possible systems of vehicle 100. As such, transmission 120 may include a gearbox, a clutch, a differential, and a drive shaft, among other possible components. A drive shaft may include axles that connect to one or more wheels/tires 121.

Wheels/tires 121 of vehicle 100 may have various configurations within example implementations. For instance, vehicle 100 may exist in a unicycle, bicycle/motorcycle, tricycle, or car/truck four-wheel format, among other possible configurations. As such, wheels/tires 121 may connect to vehicle 100 in various ways and can exist in different materials, such as metal and rubber.

Sensor system 104 can include various types of sensors, such as Global Positioning System (GPS) 122, inertial measurement unit (IMU) 124, radar 126, laser rangefinder / LIDAR 128, camera 130, steering sensor 123, and throttle/brake sensor 125, among other possible sensors. In some implementations, sensor system 104 may also include sensors configured to monitor internal systems of the vehicle 100 (e.g., O₂ monitor, fuel gauge, engine oil temperature, brake wear).

GPS 122 may include a transceiver operable to provide information regarding the position of vehicle 100 with respect to the Earth. IMU 124 may have a configuration that uses one or more accelerometers and/or gyroscopes and may sense position and orientation changes of vehicle 100 based on inertial acceleration. For example, IMU 124 may detect a pitch and yaw of the vehicle 100 while vehicle 100 is stationary or in motion.

Radar 126 may represent one or more systems configured to use radio signals to sense objects, including the speed and heading of the objects, within the local environment of vehicle 100. As such, radar 126 may include antennas configured to transmit and receive radio signals. In some implementations, radar 126 may correspond to a mountable radar system configured to obtain measurements of the surrounding environment of vehicle 100.

Laser rangefinder / LIDAR 128 may include one or more laser sources, a laser scanner, and one or more detectors, among other system components, and may operate in a coherent mode (e.g., using heterodyne detection) or in an incoherent detection mode. Camera 130 may include one or more devices (e.g., still camera or video camera) configured to capture images of the environment of vehicle 100.

Steering sensor 123 may sense a steering angle of vehicle 100, which may involve measuring an angle of the steering wheel or measuring an electrical signal representative of the angle of the steering wheel. In some implementations, steering sensor 123 may measure an angle of the wheels of the vehicle 100, such as detecting an angle of the wheels with respect to a forward axis of the vehicle 100. Steering sensor 123 may also be configured to measure a combination (or a subset) of the angle of the steering wheel, electrical signal representing the angle of the steering wheel, and the angle of the wheels of vehicle 100.

Throttle/brake sensor 125 may detect the position of either the throttle position or brake position of vehicle 100. For instance, throttle/brake sensor 125 may measure the angle of both the gas pedal (throttle) and brake pedal or may measure an electrical signal that could represent, for instance, an angle of a gas pedal (throttle) and/or an angle of a brake pedal. Throttle/brake sensor 125 may also measure an angle of a throttle body of vehicle 100, which may include part of the physical mechanism that provides modulation of energy source 119 to engine/motor 118 (e.g., a butterfly valve or carburetor). Additionally, throttle/brake sensor 125 may measure a pressure of one or more brake pads on a rotor of vehicle 100 or a combination (or a subset) of the angle of the gas pedal (throttle) and brake pedal, electrical signal representing the angle of the gas pedal (throttle) and brake pedal, the angle of the throttle body, and the pressure that at least one brake pad is applying to a rotor of vehicle 100. In other embodiments, throttle/brake sensor 125 may be configured to measure a pressure applied to a pedal of the vehicle, such as a throttle or brake pedal.

Control system 106 may include components configured to assist in navigating vehicle 100, such as steering unit 132, throttle 134, brake unit 136, sensor fusion algorithm 138, computer vision system 140, navigation / pathing system 142, and obstacle avoidance system 144. More specifically, steering unit 132 may be operable to adjust the heading of vehicle 100, and throttle 134 may control the operating speed of engine/motor 118 to control the acceleration of vehicle 100. Brake unit 136 may decelerate vehicle 100, which may involve using friction to decelerate wheels/tires 121. In some implementations, brake unit 136 may convert kinetic energy of wheels/tires 121 to electric current for subsequent use by a system or systems of vehicle 100.

Sensor fusion algorithm 138 may include a Kalman filter, Bayesian network, or other algorithms that can process data from sensor system 104. In some implementations, sensor fusion algorithm 138 may provide assessments based on incoming sensor data, such as evaluations of individual objects and/or features, evaluations of a particular situation, and/or evaluations of potential impacts within a given situation.

Computer vision system 140 may include hardware and software operable to process and analyze images in an effort to determine objects, environmental objects (e.g., stop lights, road way boundaries, etc.), and obstacles. As such, computer vision system 140 may use object recognition, Structure from Motion (SFM), video tracking, and other algorithms used in computer vision, for instance, to recognize objects, map an environment, track objects, estimate the speed of objects, etc.

Navigation / pathing system 142 may determine a driving path for vehicle 100, which may involve dynamically adjusting navigation during operation. As such, navigation / pathing system 142 may use data from sensor fusion algorithm 138, GPS 122, and maps, among other sources to navigate vehicle 100. Obstacle avoidance system 144 may evaluate potential obstacles based on sensor data and cause systems of vehicle 100 to avoid or otherwise negotiate the potential obstacles.

As shown in Figure 1, vehicle 100 may also include peripherals 108, such as wireless communication system 146, touchscreen 148, microphone 150, and/or speaker 152. Peripherals 108 may provide controls or other elements for a user to interact with user interface 116. For example, touchscreen 148 may provide information to users of vehicle 100. User interface 116 may also accept input from the user via touchscreen 148. Peripherals 108 may also enable vehicle 100 to communicate with devices, such as other vehicle devices.

Wireless communication system 146 may wirelessly communicate with one or more devices directly or via a communication network. For example, wireless communication system 146 could use 3G cellular communication, such as CDMA, EVDO, GSM/GPRS, or 4G cellular communication, such as WiMAX or LTE. Alternatively, wireless communication system 146 may communicate with a wireless local area network (WLAN) using WiFi or other possible connections. Wireless communication system 146 may also communicate directly with a device using an infrared link, Bluetooth, or ZigBee, for example. Other wireless protocols, such as various vehicular communication systems, are possible within the context of the disclosure. For example, wireless communication system 146 may include one or more dedicated short-range communications (DSRC) devices that could include public and/or private data communications between vehicles and/or roadside stations.

Vehicle 100 may include power supply 110 for powering components. Power supply 110 may include a rechargeable lithium-ion or lead-acid battery in some implementations. For instance, power supply 110 may include one or more batteries configured to provide electrical power. Vehicle 100 may also use other types of power supplies. In an example implementation, power supply 110 and energy source 119 may be integrated into a single energy source.

Vehicle 100 may also include computer system 112 to perform operations, such as operations described therein. As such, computer system 112 may include at least one processor 113 (which could include at least one microprocessor) operable to execute instructions 115 stored in a non-transitory computer readable medium, such as data storage 114. In some implementations, computer system 112 may represent a plurality of computing devices that may serve to control individual components or subsystems of vehicle 100 in a distributed fashion.

In some implementations, data storage 114 may contain instructions 115 (e.g., program logic) executable by processor 113 to execute various functions of vehicle 100, including those described above in connection with Figure 1. Data storage 114 may contain additional instructions as well, including instructions to transmit data to, receive data from, interact with, and/or control one or more of propulsion system 102, sensor system 104, control system 106, and peripherals 108.

In addition to instructions 115, data storage 114 may store data such as roadway maps, path information, among other information. Such information may be used by vehicle 100 and computer system 112 during the operation of vehicle 100 in the autonomous, semi-autonomous, and/or manual modes.

Vehicle 100 may include user interface 116 for providing information to or receiving input from a user of vehicle 100. User interface 116 may control or enable control of content and/or the layout of interactive images that could be displayed on touchscreen 148. Further, user interface 116 could include one or more input/output devices within the set of peripherals 108, such as wireless communication system 146, touchscreen 148, microphone 150, and speaker 152.

Computer system 112 may control the function of vehicle 100 based on inputs received from various subsystems (e.g., propulsion system 102, sensor system 104, and control system 106), as well as from user interface 116. For example, computer system 112 may utilize input from sensor system 104 in order to estimate the output produced by propulsion system 102 and control system 106. Depending upon the embodiment, computer system 112 could be operable to monitor many aspects of vehicle 100 and its subsystems. In some embodiments, computer system 112 may disable some or all functions of the vehicle 100 based on signals received from sensor system 104.

The components of vehicle 100 could be configured to work in an interconnected fashion with other components within or outside their respective systems. For instance, in an example embodiment, camera 130 could capture a plurality of images that could represent information about a state of an environment of vehicle 100 operating in an autonomous mode. The state of the environment could include parameters of the road on which the vehicle is operating. For example, computer vision system 140 may be able to recognize the slope (grade) or other features based on the plurality of images of a roadway. Additionally, the combination of GPS 122 and the features recognized by computer vision system 140 may be used with map data stored in data storage 114 to determine specific road parameters. Further, radar unit 126 may also provide information about the surroundings of the vehicle.

In other words, a combination of various sensors (which could be termed input-indication and output-indication sensors) and computer system 112 could interact to provide an indication of an input provided to control a vehicle or an indication of the surroundings of a vehicle.

In some embodiments, computer system 112 may make a determination about various objects based on data that is provided by systems other than the radio system. For example, vehicle 100 may have lasers or other optical sensors configured to sense objects in a field of view of the vehicle. Computer system 112 may use the outputs from the various sensors to determine information about objects in a field of view of the vehicle, and may determine distance and direction information to the various objects. Computer system 112 may also determine whether objects are desirable or undesirable based on the outputs from the various sensors.

Although Figure 1 shows various components of vehicle 100, i.e., wireless communication system 146, computer system 112, data storage 114, and user interface 116, as being integrated into the vehicle 100, one or more of these components could be mounted or associated separately from vehicle 100. For example, data storage 114 could, in part or in full, exist separate from vehicle 100. Thus, vehicle 100 could be provided in the form of device elements that may be located separately or together. The device elements that make up vehicle 100 could be communicatively coupled together in a wired and/or wireless fashion.

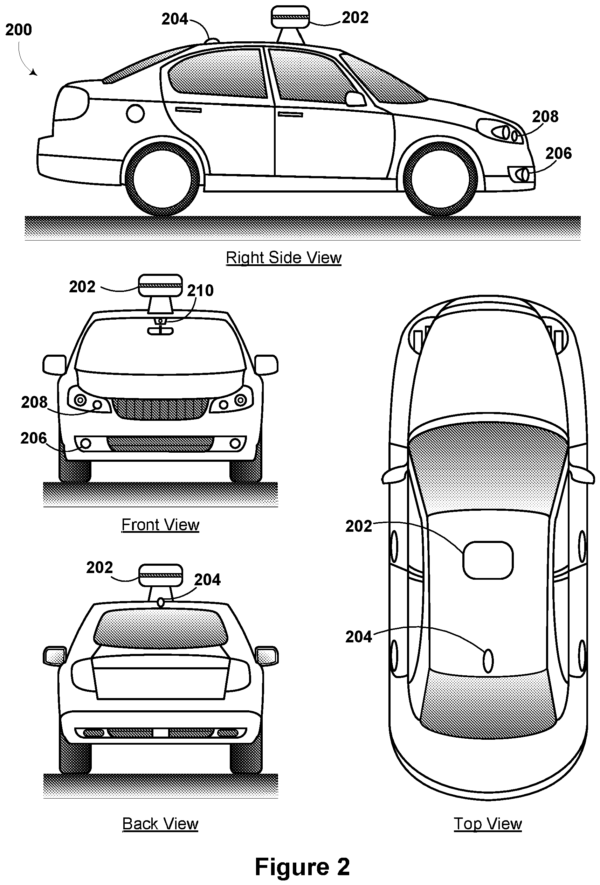

Figure 2 depicts an example physical configuration of vehicle 200, which may represent one possible physical configuration of vehicle 100 described in reference to Figure 1. Depending on the embodiment, vehicle 200 may include sensor unit 202, wireless communication system 204, radio unit 206, and camera 210, among other possible components. For instance, vehicle 200 may include some or all of the elements of components described in Figure 1. Although vehicle 200 is depicted in Figure 2 as a car, vehicle 200 can have other configurations within examples, such as a truck, a van, a semi-trailer truck, a motorcycle, a golf cart, an off-road vehicle, or a farm vehicle, among other possible examples.

Sensor unit 202 may include one or more sensors configured to capture information of the surrounding environment of vehicle 200. For example, sensor unit 202 may include any combination of cameras, radars, LIDARs, range finders, radio devices (e.g., Bluetooth and/or 802.11), and acoustic sensors, among other possible types of sensors. In some implementations, sensor unit 202 may include one or more movable mounts operable to adjust the orientation of sensors in sensor unit 202. For example, the movable mount may include a rotating platform that can scan sensors so as to obtain information from each direction around the vehicle 200. The movable mount of sensor unit 202 may also be moveable in a scanning fashion within a particular range of angles and/or azimuths.

In some implementations, sensor unit 202 may include mechanical structures that enable sensor unit 202 to be mounted atop the roof of a car. Additionally, other mounting locations are possible within various examples.

Wireless communication system 204 may have a location relative to vehicle 200 as depicted in Figure 2, but can also have different locations within implementations. Wireless communication system 200 may include one or more wireless transmitters and one or more receivers that may communicate with other external or internal devices. For example, wireless communication system 204 may include one or more transceivers for communicating with a user's device, other vehicles, and roadway elements (e.g., signs, traffic signals), among other possible entities. As such, vehicle 200 may include one or more vehicular communication systems for facilitating communications, such as dedicated short-range communications (DSRC), radio frequency identification (RFID), and other proposed communication standards directed towards intelligent transport systems.

Camera 210 may have various positions relative to vehicle 200, such as a location on a front windshield of vehicle 200. As such, camera 210 may capture images of the environment of vehicle 200. As illustrated in Figure 2, camera 210 may capture images from a forward-looking view with respect to vehicle 200, but other mounting locations (including movable mounts) and viewing angles of camera 210 are possible within implementations. In some examples, camera 210 may correspond to one or more visible light cameras. Alternatively or additionally, camera 210 may include infrared sensing capabilities. Camera 210 may also include optics that may provide an adjustable field of view.

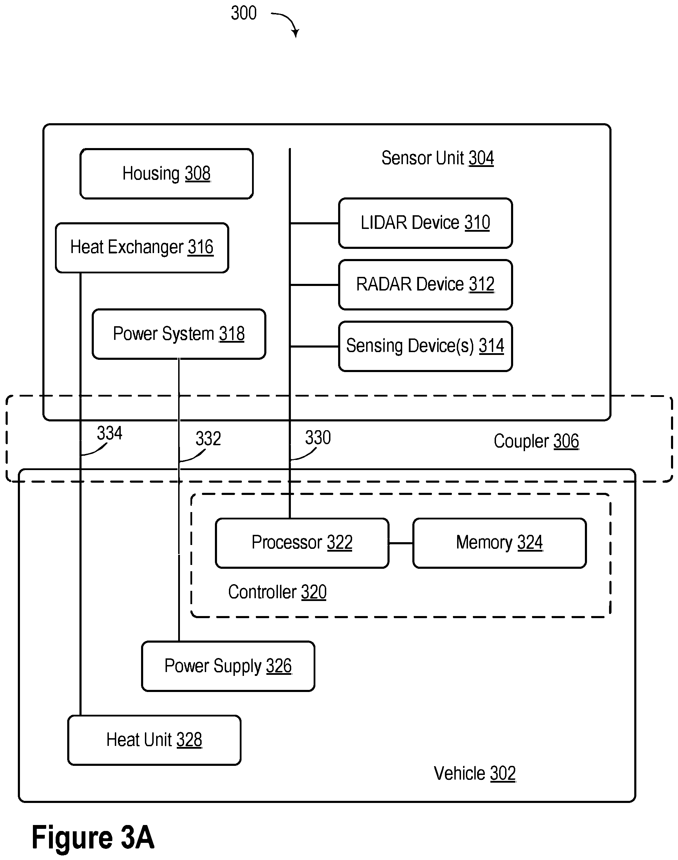

Figure 3A illustrates a block diagram of a sensing system 300 including a coupler 306. The coupler 306 may be configured to couple a sensor unit 304 to a vehicle 302. The coupler 306 may enable the sensor unit 304 to be removeably coupled to the vehicle 302. In some examples, as previously discussed, a vehicle may be sold as "autonomous ready." An "autonomous ready" vehicle may be able to perform autonomous driving functions, but may lack some of the sensors used to perform autonomous driving functions. However, the vehicle 302 may include a coupler 306 that allows a sensor unit 304 to be coupled to the vehicle 302 later. For example, a person may purchase an "autonomous ready" vehicle and may later decide to either buy or rent a sensor unit 304 in order to provide the vehicle with autonomous functionality. In some examples, the coupler 306 may be a universal, non-manufacturer specific standardized design. That is, a sensor unit 304 may be coupled to any manufacturer's vehicle that is "autonomous ready."

In one example, an "autonomous ready" vehicle 302 may include a controller 320 that includes a processor 322 and a memory 324. The "autonomous ready" vehicle 302 may also include a power supply 326 and a heat unit 328. The controller 320 may be similar or the same as the computer system 112 of Figure 1. The controller 320 may be configured to receive sensor data from the sensor unit 304 by way of a data bus 330 that passes through the coupler 306. The controller 320 may be able to determine control instructions for autonomous control of the vehicle based at least in part on the sensor data. The controller 320 may also store some data and/or control instructions in memory 324. In some examples, the controller 320 may be a fully-functional controller that can perform all of the sensor processing on its own.

Additionally, the vehicle 302 may include a power supply 326. The power supply 326 may be similar or the same as power supply 110 described with respect to Figure 1. The power supply 326 may provide a voltage (e.g., 12 volts) that supplies power to various components of the vehicle 302. In some instances, the power supply may be configured to provide other voltages than 12 volts. The power supply may be coupled to the sensor unit 304 by way of a power bus 332 that goes through the coupler 306. Additionally, the vehicle 302 may include a heat unit 328. The heat unit 328 may be a radiator or other unit configured to provide cooling of various components of vehicle 302. In some various examples, the heat unit 328 may provide cooling based on air and/or liquid cooling. The heat unit 328 may be coupled to the sensor unit 304 by way of a heat bus 334 that passes through the coupler 306.

The sensor unit 304 may contain various sensors, such as a LIDAR device 310, a RADAR device 312, and other sensing devices 314 (such as optical, acoustic, and/or other sensing devices) located in a housing 308. The housing 308 may be configured to couple to the vehicle 302 by way of the coupler 306. The sensors may be similar to those described throughout. The sensors may be coupled to the previously-described data bus that communicates sensor data to the controller 320 of the vehicle 302 through the coupler 306. The sensor unit may also include a heat exchanger 316. The heat exchanger 316 may be configured to provide cooling to the various sensors and components of the sensor unit 304. The heat exchanger 316 may use liquid cooling to remove heat from the various sensor devices during their operation. For example, the LIDAR device 310 and/or the RADAR device 312 may generate heat during the operation. In order to keep the devices cool and to prevent their failures, the heat exchanger 316 may be able to remove heat from the device(s). Additionally, as previously discussed, in order to remove the accumulated heat from the sensor unit 304, the heat unit 328 may be coupled to the sensor unit 302 by way of a heat bus that passes through the coupler 306. liquid, air, or other substance may flow through the heat bus to remove heat from the sensor unit.

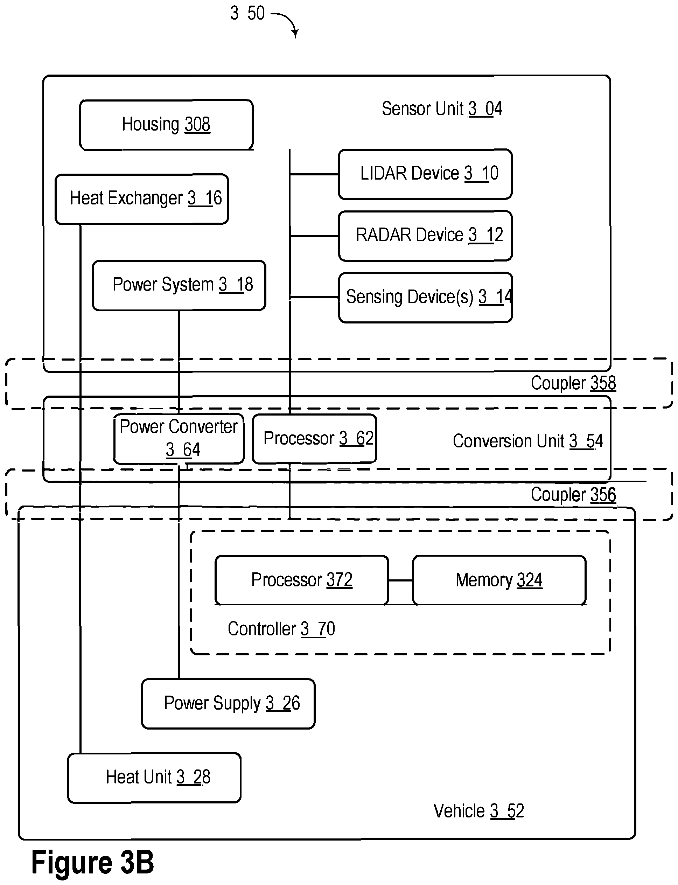

Figure 3B illustrates a block diagram of another sensing system 350 including a coupler 356. In some examples, an "autonomous ready" vehicle may be able to perform autonomous driving functions, but may lack both some of the sensors used to perform autonomous driving functions as well as some of the processing power to perform autonomous driving functions. Similar to the example discussed with respect to Figure 3A, a person may purchase an "autonomous ready" vehicle 352. However, the "autonomous ready" vehicle 352 of Figure 3B may be a lower cost vehicle than that of Figure 3A. The lower cost "autonomous ready" vehicle 352 may not have sufficient processing capabilities for autonomous driving calculations. Thus, the controller 370 may not be able to make the determinations required based on sensor data to autonomously drive the vehicle. However, the controller 370 and processor 372 may be able to perform some control functions of the vehicle.

Similar to vehicle 302 of Figure 3A, the vehicle 352 may include a coupler 356 that allows other devices to be coupled to the vehicle 352 later. For example, a person may purchase the "autonomous ready" vehicle 352 and later decide to either buy or rent a sensor unit 304 to provide the vehicle with autonomous functionality. As previously discussed, the coupler 356 may be a universal, non-manufacturer specific standardized design. That is, a sensor unit 304 may be coupled to any manufacturer's vehicle that is "autonomous ready."

In order to provide autonomous vehicle control, sensing system 350 may include a conversion unit 354. The conversion unit 354 may couple to the vehicle 352 by way of coupler 356 and to the sensor unit 304 by way of coupler 358. In some further examples, the conversion unit 354 may be integrated within the sensor unit 304 and the coupler 358 may be omitted.

The conversion unit 354 may perform several functions to enable the vehicle 352 to perform autonomous driving functions. In some examples, the conversion unit 354 may include a processor 362. The processor 362 may be configured to receive the sensor data from the data bus of the sensor unit. The processor 362 may also receive data from the controller 370 of the vehicle 352. The controller 370 may communicate signals related to the vehicle 352 to the processor 362. The controller 370 may be in communication and/or provide a connection to a control bus of the vehicle 352 to the processor 362. The bus of the vehicle 352 may be a Controller Area Network (CAN) bus in communication with an on-board vehicle diagnostic (OBD) system. The CAN bus may enable various units of the vehicle 352 to communicate with each other. In some other examples, the communication bus may be a bus other than a CAN bus.

The processor 362 may be able to interpret sensor data from sensor unit 304 and vehicle data from vehicle 352 to determine a control scheme for the autonomous operation of the vehicle 352. The processor 362 may further be able to determine control signals for the vehicle 352. The processor 362 may communicate the control signals to the controller 370 of the vehicle 352 in order to autonomously operate the vehicle 352. Therefore, the processor 362 of the conversion unit 354 may perform autonomous driving calculations that would otherwise be performed by a processing unit of a vehicle. Thus, the processor 362 may be able to tap into the CAN bus (or other data bus) of the vehicle to provide autonomous operation.

The conversion unit 354 may also contain a power converter 364. The power converter 364 may be able to convert a vehicle voltage to one or more voltages to power the various components of the sensor unit 304. The power converter 364 may receive one or more voltages from the vehicle 352 and convert them to one or more output voltages to the sensor unit 304.

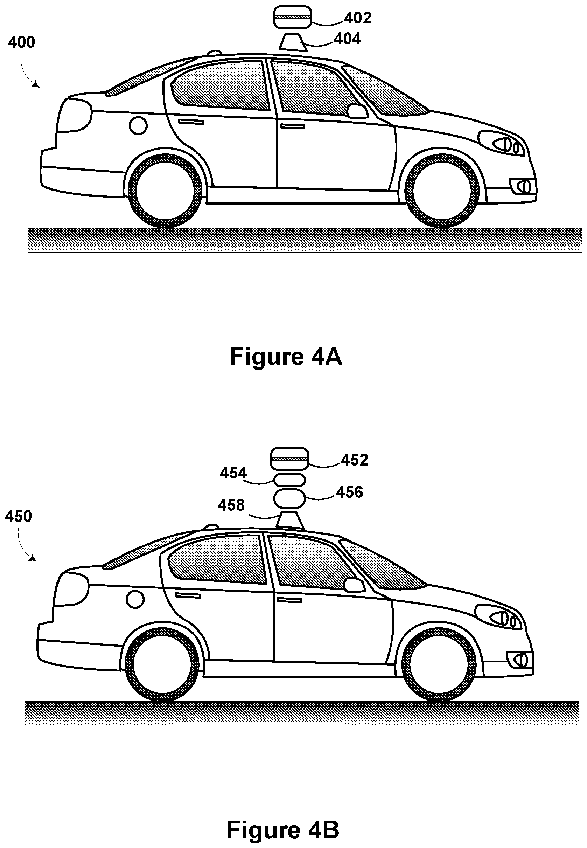

Figure 4A depicts a physical configuration of a vehicle 400. The vehicle 400 may have a sensor unit 402 coupled to the top of the vehicle. The vehicle 400 may also have a coupler 404 that couples the sensor unit 402 and the vehicle 400. Figure 4B depicts a physical configuration of a vehicle 450. The vehicle 450 may have a sensor unit 452 coupled to a conversion unit 456 by way of a first coupler 454. The conversion unit 456 may coupled to the top of the vehicle 450 by a coupler 456.

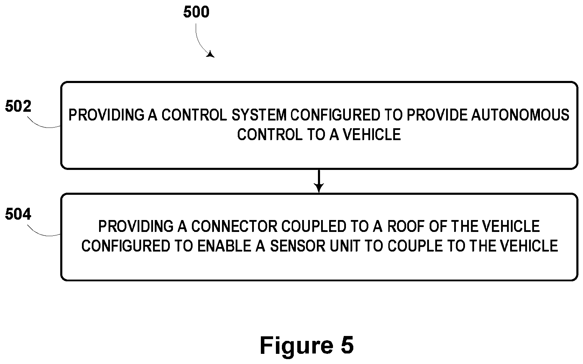

Figure 5 is a flowchart of example method 500 for implementing a vehicle system. Method 500 represents an example method that may include one or more operations, functions, or actions, as depicted by one or more of blocks 502 and 504, each of which may be carried out by any of the systems shown in Figures 1, 2, 3A, 3B, and 4, among other possible systems. Those skilled in the art will understand that the flowchart described herein illustrates functionality and operation of certain implementations of the present disclosure. In this regard, each block of the flowchart may represent a module, a segment, or a portion of program code, which includes one or more instructions executable by one or more processors for implementing specific logical functions or steps in the process. The program code may be stored on any type of computer readable medium, for example, such as a storage device including a disk or hard drive.

In addition, each block may represent circuitry that is wired to perform the specific logical functions in the process. Alternative implementations are included within the scope of the example implementations of the present application in which functions may be executed out of order from that shown or discussed, including substantially concurrent or in reverse order, depending on the functionality involved, as would be understood by those reasonably skilled in the art. In examples, a computing system may cause a system to perform one or more blocks of method 500.

At block 502, method 500 includes providing a control system configured to provide autonomous control to a vehicle. As previously discussed, the control system may be configured to control the vehicle in an autonomous mode. The control system may be configured to operate the throttle, brakes, steering, and other operations to control the vehicle. In some examples, the control system may further include navigation capabilities. The navigation capabilities may enable the autonomous vehicle to plan a route of operation. The vehicle may also be "autonomous ready." The "autonomous ready" vehicle may have the capabilities to operate itself, but it may not include sensing systems that may be used during the autonomous operation of the vehicle.

In a first example of an "autonomous ready" vehicle, the vehicle includes a processing system that can receive sensor data and interpret the sensor data to control the vehicle. When sensor data is interpreted, the processing system may communicate instructions to the control system to operate the "autonomous ready" vehicle in an autonomous mode. For example, the sensor data may include data from RADAR, LIDAR, optical, and/or other sensors. The processing system may be able to determined localization of the vehicle, as well as obstacles located near the vehicle. The processing system may use both the localization as well as obstacles in both route planning and control of the vehicle.

In a second example of an "autonomous ready" vehicle, the vehicle may not include a processing system that can receive and interpret the sensor data. In these examples, an external processor may be provided to receive and interpret the sensor data. This external processor may be part of a conversion unit that is added to the vehicle. When sensor data is interpreted by the external processor of the conversion unit, the external processor may communicate instructions to the control system of the "autonomous ready" vehicle to operate the "autonomous ready" vehicle in an autonomous mode. The sensor data may include data from RADAR, LIDAR, optical, and/or other sensors. The external processor may be able to determined localization of the vehicle, as well as obstacles located near the vehicle. The external processor may use both the localization as well as obstacles in both route planning and control of the vehicle. Further, the external processor may be able to communicate with the control system of "autonomous ready" vehicle by way a data bus of the vehicle.

At block 504, method 500 includes providing a connector coupled to a roof of the vehicle configured to enable a sensor unit to couple to the vehicle. The connector may enable a sensor unit to be coupled to the top of the "autonomous ready" vehicle. The sensor unit may provide sensors that enable the "autonomous ready" vehicle to function in a fully autonomous mode. Additionally, the connector may be a universal connector. A universal connector may be used by various vehicle manufacturer that build "autonomous ready" vehicles. By using a universal connector, a sensor unit may be coupled to "autonomous ready" vehicles from any manufacturer to enable autonomous functionality.

The connector may provide various connections between the "autonomous ready" vehicle and the sensor unit. The connector may provide a data connection. In some examples, the data connection may provide sensor data from the sensor unit to the vehicle. In other examples, the sensor unit may be coupled to or include a conversion unit. In these examples, the connector may receive control signals from the conversion unit. The control signals may be instructions for the autonomous operation of the vehicle.

The connector may also provide power and heat exchanging to the sensor unit. The connector may include a voltage that transmits power to the sensor unit when the sensor unit is coupled to the vehicle. In some examples, the connector may provide a 12-volt (or other voltage) connection to the sensor unit. The sensor unit or conversion unit may also include voltage conversion that provides appropriate voltages for the various components of the sensor unit. Additionally, the connector may be configured to provide heat exchanging to the sensor unit. The heat exchanging may be performed by air, liquid, or other heat exchange means. During the operation of the sensor unit, heat may be generated. It may be desirable for the heat to be removed from the sensor unit. The vehicle may be configured with a radiator or other type of heat dissipation component that is connected to the heat exchanging portion of the connector.

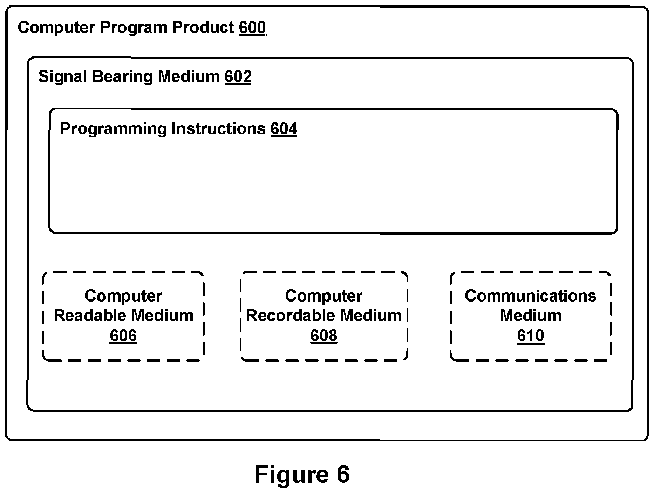

Figure 6 is a schematic illustrating a conceptual partial view of an example computer program product that includes a computer program for executing a computer process on a computing device, arranged according to at least some embodiments presented herein. In some embodiments, the disclosed methods may be implemented as computer program instructions encoded on a non-transitory computer-readable storage media in a machine-readable format, or on other non-transitory media or articles of manufacture.

In one embodiment, example computer program product 600 is provided using signal bearing medium 602, which may include one or more programming instructions 604 that, when executed by one or more processors may provide functionality or portions of the functionality described above with respect to Figures 1-6. In some examples, the signal bearing medium 602 may encompass a non-transitory computer-readable medium 606, such as, but not limited to, a hard disk drive, a Compact Disc (CD), a Digital Video Disk (DVD), a digital tape, memory, etc. In some implementations, the signal bearing medium 602 may encompass a computer recordable medium 608, such as, but not limited to, memory, read/write (R/W) CDs, R/W DVDs, etc. In some implementations, the signal bearing medium 602 may encompass a communications medium 610, such as, but not limited to, a digital and/or an analog communication medium (e.g., a fiber optic cable, a waveguide, a wired communications link, a wireless communication link, etc.). Similarly, the signal bearing medium 602 may correspond to a remote storage (e.g., a cloud). A computing system may share information with the cloud, including sending or receiving information. For example, the computing system may receive additional information from the cloud to augment information obtained from sensors or another entity. Thus, for example, the signal bearing medium 602 may be conveyed by a wireless form of the communications medium 610.

The one or more programming instructions 604 may be, for example, computer executable and/or logic implemented instructions. In some examples, a computing device such as the computer system 112 of Figure 1 may be configured to provide various operations, functions, or actions in response to the programming instructions 604 conveyed to the computer system 112 by one or more of the computer readable medium 606, the computer recordable medium 608, and/or the communications medium 610.

The non-transitory computer readable medium could also be distributed among multiple data storage elements and/or cloud (e.g., remotely), which could be remotely located from each other. The computing device that executes some or all of the stored instructions could be a vehicle, such as the vehicle 200 illustrated in Figure 2. Alternatively, the computing device that executes some or all of the stored instructions could be another computing device, such as a server.

The above detailed description describes various features and functions of the disclosed systems, devices, and methods with reference to the accompanying figures. While various aspects and embodiments have been disclosed herein, other aspects and embodiments will be apparent. The various aspects and embodiments disclosed herein are for purposes of illustration and are not intended to be limiting, with the true scope being indicated by the following claims.

This specification includes the following clauses:
1. A vehicular system comprising:
   a control system configured to provide autonomous control to a vehicle; and
   a connector coupled to a roof of the vehicle configured to enable a sensor unit to couple to the vehicle, wherein the connector comprises:
      a power supply connection; and
      a data bus, wherein the data bus is coupled to the control system.
2. The vehicular system of clause 1, wherein the connector further comprises a thermal connection configured to remove heat from the sensor unit.
3. The vehicular system of clause 1, wherein the data bus is configured to provide vehicular control instructions from the sensor unit to the control system.
4. The vehicular system of clause 1, wherein the data bus is configured to provide sensor data from the sensor unit to the control system.
5. The vehicular system of clause 1, further comprising a conversion unit configured to:
   determine an object in an environment of the vehicle; and
   communicate control signals to the vehicle by way of the data bus, wherein the control signals are based on the determined object
6. The vehicular system of clause 5, wherein the conversion unit is further configured to convert a voltage provided by the power supply connection to at least one voltage of the sensor unit.
7. The vehicular system of clause 1, wherein the connector is configured to removably couple the sensor unit to the vehicle.
8. A sensor unit comprising:
   a plurality of sensors configured to sense an environment of a vehicle; and
   a coupling portion of the sensor unit configured to couple the sensor unit to the vehicle, the coupling portion comprising:
      a power supply connection; and
      a data bus, wherein the data bus is configured to provide information to a control system of the vehicle.
9. The sensor unit of clause 8, further comprising a conversion unit configured to:
   determine an object in the environment of the vehicle; and
   communicate control signals to the vehicle by way of the data bus, wherein the control signals are based on the determined object.
10. The sensor unit of clause 9, wherein the conversion unit is further configured to convert a voltage provided by the power supply connection to at least one voltage of the sensor unit.
11. The sensor unit of clause 8, wherein the coupling portion is configured to removably couple the sensor unit to the vehicle.
12. The sensor unit of clause 8, wherein the coupling portion further comprises a thermal connection configured to remove heat from the sensor unit.
13. The sensor unit of clause 8, wherein the data bus is configured to provide vehicular control instructions from the sensor unit to the control system of the vehicle.
14. The sensor unit of clause 8, wherein the data bus is configured to provide sensor data from the sensor unit to the control system of the vehicle.
15. A method comprising:
   providing a control system configured to provide autonomous control to a vehicle; and
   providing a connector coupled to a roof of the vehicle configured to enable a sensor unit to couple to the vehicle, wherein the connector comprises:
      a power supply connection; and
      a data bus, wherein the data bus is coupled to the control system.
16. The method of clause 15, further comprising providing a conversion unit configured to:
   determine an object in an environment of the vehicle; and
   communicate control signals to the vehicle by way of the data bus, wherein the control signals are based on the determined object.
17. The method of clause 16, wherein the conversion unit is further configured to convert a voltage provided by the power supply connection to at least one voltage of the sensor unit.
18. The method of clause 15, further comprising providing a thermal connection configured to remove heat from the sensor unit.
19. The method of clause 15, wherein the data bus is configured to provide vehicular control instructions from the sensor unit to the control system of the vehicle.
20. The method of clause 15, wherein the data bus is configured to provide sensor data from the sensor unit to the control system of the vehicle.

## Claims

1. A system (350) comprising:
a control system (370) configured to autonomously control a vehicle (352); and
a connector (356) coupled to the vehicle, wherein the connector is configured to enable a sensor unit (304) to be electrically connected to the vehicle, wherein the sensor unit generates sensor data representing an environment of the vehicle and includes a processor (362) configured to process the sensor data representing the environment, and
wherein the connector comprises:
a power supply connection (332); and
a data bus (330) configured to connect to the control system and transmit data from the processor to the control system, wherein the data conveys a path for the vehicle to navigate.

2. The system of claim 1, wherein the sensor unit comprises a radar unit (312),
wherein the processor is configured to process radar data generated by the radar unit, and
wherein the data bus is configured to transmit the processed radar data to the control system.

3. The system of claim 1 or claim 2, wherein the data bus is further configured to:
provide processed sensor data from the sensor unit to the control system.

4. The system of claim 1, claim 2, or claim 3, further comprising:
a conversion unit (354) configured to convert a first voltage supplied by the power supply connection to a second voltage used by the sensor unit.

5. The system of any one of the preceding claims, wherein the sensor unit comprises one or more lidar units (310).

6. The system of claim any one of the preceding claims, wherein the sensor unit comprises at least two types of sensors.

7. The system of claim 6, wherein the at least two types of sensors comprises at least two of a lidar unit (310), a camera, and a radar unit (312).

8. The system of claim 1, wherein the sensor unit comprises multiple cameras.

9. A sensor unit (304) comprising:
a first sensor positioned in a housing, wherein the first sensor is configured to generate sensor data representing an environment;
a processor (362) configured to process the sensor data representing the environment; and
a connector (356) configured to electrically couple the first sensor to a control system of a vehicle (352),
wherein the connector comprises:
a power supply connection (332); and
a data bus (330) configured to connect to the control system (370) of the vehicle (352) and the first sensor, wherein the data bus enables the processor to communicate data to the control system, and wherein the data conveys a path for the vehicle to navigate.

10. The sensor unit of claim 9, wherein the data bus is further configured to:
provide processed sensor data from the sensor unit to the control system.

11. The sensor unit of claim 9 or claim 10, further comprising:
a conversion unit (354) configured to convert a first voltage supplied by the power supply connection to a second voltage used by the first sensor.

12. The sensor unit of any one of claims 9 to 11, wherein the first sensor is a lidar unit (310), and wherein the sensor unit further comprises a camera or a radar (312).

13. The sensor unit of any one of claims 9 to 11, wherein the first sensor is a lidar unit (310), and
wherein the processor is configured to process lidar data generated by the lidar unit, and
wherein the data bus is configured to transmit the processed lidar data to the control system.

14. The sensor unit of any one of claims 9 to 11, wherein the first sensor is a first type of sensor, and wherein the sensor further comprises a second type of sensor.

15. A non-transitory computer readable medium claim having stored therein instructions that, when executed by a computing system, cause the computing system to perform the method of any one of claims 1 to 8.
